# EUROPEAN PATENT SPECIFICATION

(11) **EP 4 508 551 B1**
(45) Date of publication and mention of the grant of the patent: **22.07.2026**
(21) Application number: 24731053.5
(22) Date of filing: 24.05.2024
(51) Int. Cl.: G06F 16/955

(54) **COMPUTER-IMPLEMENTED METHODS OF UPDATING LINKS IN A WEBSITE; SYSTEMS AND COMPUTER PROGRAM PRODUCTS**
COMPUTERIMPLEMENTIERTE VERFAHREN ZUR AKTUALISIERUNG VON VERKNÜPFUNGEN AUF EINER WEBSITE, SYSTEME UND COMPUTERPROGRAMMPRODUKTE
PROCÉDÉS, MIS EN oeUVRE PAR ORDINATEUR, DE MISE À JOUR DE LIAISONS DANS UN SITE WEB, SYSTÈMES ET PRODUITS PROGRAMMES D'ORDINATEUR

(30) Priority: 19.06.2023 GB 202309159
(43) Date of publication of application: 19.02.2025
(73) Proprietor: Skyscanner Technology Limited, London W1D 4AL (GB)
(72) Inventor: BOATMAN, Adam, London W1D 4AL (GB); COATES, Gryff, London W1D 4AL (GB)
(74) Representative: Langley, Peter James
(86) International application number: PCT/GB2024/051343
(87) International publication number: WO 2024/261449

(56) References cited:
- US-A1- 2013 139 043
- ANONYMOUS: "multidimensional array", 17 January 2023 (2023-01-17), XP093183823, Retrieved from the Internet <URL:https://en.wiktionary.org/wiki/multidimensional_array>

## Description

### BACKGROUND OF THE INVENTION

### 1. Field of the Invention

The field of the invention relates to computer-implemented methods of updating links in a website, and to related systems, link updaters, computer program products and computers.

### 2. Technical Background

Managing the (e.g. internal) linking efficiently in a web site is an unsolved problem. For example, a website may have internal linking data deriving from former static in-house sources, from a dynamic in-house data generation pipeline and from external parties (e.g. agencies). Even though these links are all displayed on the frontend of the website server system, there is no unified method for ingesting, storing or delivering these links from the backend of the website server system. There is a need for a core infrastructure that can handle internal links generated dynamically inhouse and optionally those links provided by external parties (e.g. agencies), and optionally to consolidate many data sources for internal linking that may currently exist.

### 3. Discussion of Related Art

EP2767913A1 and EP2767913B1 disclose a system and method for virtual data warehouses having table link capabilities. In particular, some embodiments include a plurality of virtual data warehouses built on top of a data center running Apache Hive. Each virtual data warehouse can be modeled as a database and manage data in forms of database tables. The virtual data warehouse can include links which import tables from other virtual data warehouses by reference. Each link may contain partition metadata for the table partitions by dates of the source table and retention metadata to declare the needed retention time period for the partitions of the source table. The links can be dynamic and update when the corresponding source table receives new partitions or drops partitions. When a virtual data warehouse is migrated to another data center, the system can retain necessary table partitions to remain on the current data center based on the partition metadata and retention metadata of the links.

US20130139043A1 discloses a system, apparatus and method for automatically updating links on a webpage.

### SUMMARY OF THE INVENTION

According to a first aspect of the invention, there is provided a computer-implemented method of updating links in a website backend with updated links, wherein the updated links in the website backend are made available to a website frontend in communication with the website backend, the method including the steps of:
(i) storing or accessing a multi-dimensional data structure, comprising at least two dimensions, the multi-dimensional data structure including data receiving elements, each data receiving element uniquely identified by a respective address in the multi-dimensional data structure;
(ii) receiving update link data including parameters, and using the parameters to enter groups of links into the data receiving elements to produce updated data receiving elements;
(iii) putting the updated data receiving elements into a data store, in a data store format, the data store including data mapping the updated data receiving elements in the data store to database tables, wherein the database tables are in one-to-one correspondence with the updated data receiving elements in the data store;
(iv) storing new database tables using the data mapping the updated data receiving elements in the data store to the database tables, and ingesting the new database tables to a database, and recording the ingested new database tables in a table of latest versions;
(v) using the table of latest versions to obtain latest database tables from the database, and updating the links in the website backend using the latest database tables from the database, wherein updating the links in the website backend using the latest database tables from the database includes updating at least ten thousand links, and
(vi) the website backend making available the updated links in the website backend to the website front end, in which the website frontend is in communication with the website backend, wherein the backend includes page instances, in which each page instance includes metadata relating to the page, including data relating to an address, or to a group of addresses, associated with the page, in the multi-dimensional data structure, the backend using page instances and links included in database tables relating to the address, or to the group of addresses, to provide web pages to the front end.

An advantage is managing updating of linking in a web site efficiently. An advantage is cheaper updating of linking in a web site. The method has the advantage of enabling more effective use of storage space, which is cheap, instead of use of longer read times and greater use of computing resources to update links individually, which are more expensive. A computer system implementing the computer-implemented method operates more efficiently as a computer system, because link updates may be performed in bulk, rather than individually.

The method may be one wherein the website is a website for travel services.

The method may be one wherein the travel services include flights, or hotel reservations, or car hire.

The method may be one wherein the parameters define which links appear on which donor website page or pages.

The method may be one wherein a respective page instance item includes respective links generated by the website owner and respective links generated by a third party.

The method may be one wherein database tables are stored in the database (e.g. DynamoDB), the database tables including page instance items.

The method may be one wherein link groups are children within a respective page instance item.

The method may be one wherein respective groups of links are associated with respective webpage instances.

The method may be one wherein the received update link data includes a respective update for respective page instances.

The method may be one wherein the new database tables are stored in a format in which links associated with a URL are ready to be served from the database.

The method may be one including the step of: (vii) the website frontend serving first updated links of the updated links in webpage content of a webpage, responsive to a request for the webpage.

The method may be one including updating links in principal web pages of the website, e.g. search engine optimization (SEO) landing pages.

The method may be one wherein the update link data includes links generated by the website owner and includes links generated by third parties.

The method may be one wherein ingesting the new database tables to the database is performed using a single instruction. This is an advantage over updating links individually, which requires many instructions to update many data elements.

The method may be one wherein a new Table is stored or retained for each respective Table update. An advantage is creating a new Table is cheaper than modifying on old Table, because modifying an old Table requires many instructions to update many data elements.

The method may be one wherein recent versions of old Tables (e.g. 2 or less, 3 or less, 5 or less, or 10 or less) are stored or retained, and other versions of old Tables are deleted.

The method may be one wherein only new Tables are stored for each bulk update of Tables.

The method may be one including a step of the database serving a previous version of a database table, in response to an instruction to serve the previous version of the database table.

The method may be one including a step of the database serving a previous version of a set of database tables, in response to an instruction to serve the previous version of the set of database tables.

The method may be one in which previous database tables are stored in the database with a corresponding version identifier, and the method includes the step of rolling back the links at the website backend to use the links in the previous database tables that are stored in the database with the corresponding version identifier.

The method may be one wherein database tables in the database include a version identifier.

The method may be one wherein database tables in the database include a version identifier, and database tables corresponding to a particular identifier are accessible for review/analysis using the particular identifier.

The method may be one wherein database tables in the database include a version identifier, and database tables corresponding to a particular identifier are exportable for review/analysis using the particular identifier.

The method may be one wherein updating the links in the website backend using the latest database tables from the database includes updating at least one hundred thousand links.

The method may be one wherein updating the links in the website backend using the latest database tables from the database includes updating at least one million links.

The method may be one wherein updating the links in the website backend using the latest database tables from the database includes updating at least two million links.

The method may be one wherein the new database tables may only be ingested to the database, when a corresponding version identifier has been created and is used to identify uniquely the new database tables.

The method may be one wherein after the new database tables are ingested to the database, the new database tables may not be changed until further new database tables are ingested to the database.

The method may be one wherein steps (i) to (iv) include:
(a) Triggering a directed acyclic graph (DAG), including a new version number;
(b) Getting the link update data;
(c) Identifying relevant tables that are being updated;
(d) Retrieving a latest version of the identified tables;
(e) Putting the link updates to the retrieved latest version of the identified tables;
(f) Writing the results of step (e) as a new version;
(g) Importing files of the new version to a database, to create a new table in the database.

The method may be one wherein in step (iv), tables are batch imported into the database, e.g using python.

The method may be one wherein each table has its own schema.

The method may be one wherein old table versions are stored in the database.

The method may be one wherein in step (v), the latest iteration of a version metadata table is propagated to a link-service API, which is part of the backend.

The method may be one wherein the link-service API makes links available to the front end.

The method may be one wherein the link-service API uses Java.

The method may be one wherein the link-service API is a backend API which uses a locally stored version table to retrieve the correct table from the database.

The method may be one wherein the link-service API is a backend API which receives input from a microsite or from a component, for frontend integration.

The method may be one wherein the link-service API is a backend API which queries a configuration service to determine which version of database tables should be used.

The method may be one wherein the link-service API is a backend API, wherein a version of a link state served by the backend API is configurable. An advantage is that a rollback to a previous link state is possible.

The method may be one wherein the received update link data includes a list of which recipient pages are linked to per donor page.

The method may be one wherein in step (v), updating the links in the website backend comprise single item look-ups by URL.

The method may be one wherein the table of latest versions of step (iv) is a separate table of versions that is stored and which sets which tables should be used for a given version.

The method may be one wherein when data is ingested, the release of that data is staggered, in two stages; the first stage is a trigger to take data in the internal linking store and push it to the database; then an approval is received before the changes are released.

The method may be one wherein retrieval is performed of the previous table versions, in which the new table versions are added to, or overwrite, the previous table versions.

The method may be one wherein table versions are immutable.

The method may be one wherein the multi-dimensional data structure includes a {market}/{locale}/{page_type}structure.

The method may be one wherein externally created link data is stored in a bucket, and then a DAG is triggered to transform the link data stored in the bucket into a structure suitable for ingestion into the database.

The method may be one wherein a batch job is used to transform the link data stored in the bucket into the structure suitable for ingestion into the database, eg. using python.

The method may be one wherein step (iv) includes adding a new version to the table of latest versions, wherein the new version is a copy of the previous version except for the new database tables.

The method may be one wherein a configuration service stores data identifying which version is a current version.

The method may be one wherein the configuration service records which version of the ingested database tables is currently in use.

The method may be one wherein the ingested database tables currently in use are testable using query parameters.

The method may be one wherein a version is queryable to provide the count of total links.

The method may be one wherein a version is queryable to provide the count of total links on a specified web page.

The method may be one wherein a version is queryable to provide links by donor URL.

The method may be one wherein the database is stored in database instances which are multi region. An advantage is that multi region database instances allow faster request times in different geographic regions.

The method may be one wherein one region holds the primary database which is then pushed using synchronous replication to read replicas for other regions.

The method may be one wherein update link data is validated.

The method may be one wherein the update link data is validated to ensure that web pages do not link to themselves.

The method may be one wherein the update link data is validated to ensure that Links contained on a donor page all share the same top level domain (TLD) as the donor page itself.

The method may be one wherein the update link data is validated to ensure any link can only appear once on a donor page.

The method may be one wherein the update link data is validated to check the recipient page pointed to by the link is valid.

The method may be one wherein link validity is cached. An advantage is that a particular web page is not accessed too frequently, to slow down access to the website.

The method may be one wherein update link data which fails validation is notified to an originator of the update link data.

The method may be one wherein update link data includes a configurable anchor text field.

The method may be one wherein update link data includes a tab group field.

The method may be one wherein update link data is such that an internal linking state for a hostname remains the same once all pages for that hostname are generated.

The method may be one wherein the database is served via a unified link-service endpoint.

The method may be one wherein the update link data is in csv files.

The method may be one wherein the datastore format includes json or includes j son compatibility.

The method may be one wherein the links are internal links.

According to a second aspect of the invention, there is provided a system including a website back end, a website front end, and a link updater in communication with the website backend, the link updater including a data store, a database and a table of latest versions, the system configured to update links in the website backend with updated links, wherein the updated links in the website backend are made available to the website frontend in communication with the website backend, wherein
(i) the link updater is configured to store or to access a multi-dimensional data structure, comprising at least two dimensions, the multi-dimensional data structure including data receiving elements, each data receiving element uniquely identified by a respective address in the multi-dimensional data structure;
(ii) the link updater is configured to receive update link data including parameters, and to use the parameters to enter groups of links into the data receiving elements to produce updated data receiving elements;
(iii) the link updater is configured to put the updated data receiving elements into the data store, in a data store format, the data store including data mapping the updated data receiving elements in the data store to database tables, wherein the database tables are in one-to-one correspondence with the updated data receiving elements in the data store;
(iv) the link updater is configured to store new database tables using the data mapping the updated data receiving elements in the data store to the database tables, and to ingest the new database tables to the database, and to record the ingested new database tables in the table of latest versions;
(v) the link updater is configured to use the table of latest versions to obtain latest database tables from the database, and to update the links in the website backend using the latest database tables from the database, wherein to update the links in the website backend using the latest database tables from the database includes updating at least ten thousand links, and
(vi) the website backend is configured to make available the updated links in the website backend to the website front end, wherein the backend includes page instances, in which each page instance includes metadata relating to the page, including data relating to an address, or to a group of addresses, associated with the page, in the multi-dimensional data structure, the backend configured to use page instances and links included in database tables relating to the address, or to the group of addresses, to provide web pages to the front end.

An advantage is managing updating of linking in a web site efficiently. An advantage is cheaper updating of linking in a web site. The system has the advantage of enabling more effective use of storage space, which is cheap, instead of use of longer read times and greater use of computing resources to update links individually, which are more expensive. The computer system operates more efficiently as a computer system, because link updates may be performed in bulk, rather than individually.

### BRIEF DESCRIPTION OF THE FIGURES

Aspects of the invention will now be described, by way of example(s), with reference to the following Figures, in which:
Figure 1 shows a schematic diagram of an example system including a website structure and a link configuration service.
Figure 2 shows a schematic example of Step One.
Figure 3 shows a schematic example of Step Two.
Figure 4 shows a schematic example of Step Three.
Figure 5 shows a schematic example of Step Four.
Figure 6 shows a schematic example of Step Five.

### DETAILED DESCRIPTION

In an example, there is provided a core infrastructure for ingesting, storing and delivering internal links to principal web pages of a website, e.g. to search engine optimization (SEO) landing pages. An SEO landing page is a purpose-designed webpage that aims to rank well in search results and drive conversions or leads. The core infrastructure is able to ingest, store and deliver links generated in-house and optionally links generated by third party agencies. The core infrastructure may be flexible enough to handle future requirements for links generated in-house and optionally links generated by third party agencies.

Internal linking to principal web pages, e.g. search engine optimization (SEO) landing pages, is one of the most effective methods of distributing page authority around a web site, and therefore communicating, directly or indirectly, to search engines which web pages are considered to be the most important. Managing the (e.g. internal) linking efficiently is an unsolved problem. For example, a website may have internal linking data deriving from former static in-house sources, from a dynamic in-house data generation pipeline and from external parties (e.g. agencies). Even though these links are all displayed on the frontend of the website server system, there is no unified method for ingesting, storing or delivering these links from the backend of the website server system. There is a need for a core infrastructure that can handle internal links generated dynamically inhouse and optionally those links provided by external parties (e.g. agencies), and optionally to consolidate many data sources for internal linking that may currently exist.

### System including a Website Structure

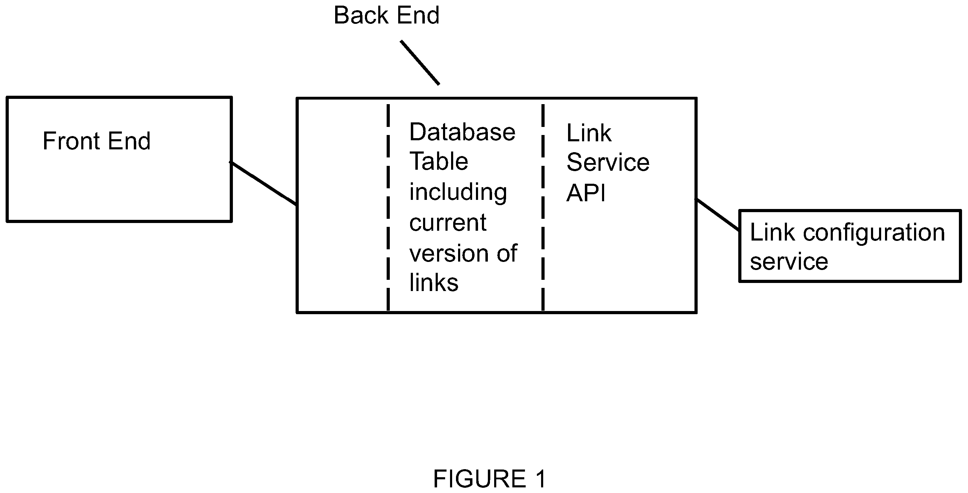

In a website structure, there is provided a front end, and a back end in communication with the front end, the backend including a database table which includes the current version of the website links, the backend including a link service API which is configured to receive a new database table of website links which replaces the previous database table of website links, in which the link service API is configured to receive the new database table of website links which replaces the previous database table of website links from a link configuration service, in which the link configuration service is in communication with the link service API. There is provided a system including the website structure and the link configuration service. An example is shown in **Figure 1****.**

In the website structure, the terms frontend (or sometimes referred to as front end or front-end) and backend (or sometimes referred to as back end or back-end) refer to the separation of concerns between the frontend, e.g. the presentation layer, and the backend, e.g. the data access layer. The terms front end and backend may be used in respect of software. The terms front end and backend may be used in respect of hardware.

### Possible Technical Requirements for providing a core infrastructure for ingesting, storing and delivering internal links to principal web pages of a website

To ensure the previous link data state is stored: link data state may be versioned; the link-service database (e.g. DynamoDB) may be configurable to serve a previous version of the link data state.

To ensure pages do not link to themselves, when raw internal linking data is ingested it may be validated by the following rule: Links contained on a donor page don't contain a (circular) link to the donor page itself; the data model defines which links appear on a donor page. A donor page is a page containing one or more links.

To ensure internal links only belong to the same hostname, when raw internal linking data is ingested, it may be validated using the following rule: Links contained on a donor page all share the same top level domain (TLD) as the donor page itself. Example TLDs are skyscanner.net, skyscanner.com.

To ensure there is/are no duplicate internal links on the page, when raw internal linking data is ingested it may be validated using the following rule: any link can only appear once on a donor page (including across all tabs, sections, subpages etc).

To ensure internal links link to valid pages/URLs, when raw internal linking data is ingested, it may be validated using the following rule: check the recipient page pointed to by the link is valid (e.g. 200 code generated, not 4xx 5xx codes generated); Link validity may be cached so that popular recipient pages aren't overly requested (e.g. spammed) with validity checks.

To ensure internal links have configurable anchor text, the data model may have an anchor text field.

To ensure internal linking state for hostname remains the same once all pages for that hostname are generated, once data is stored in link-service database (e.g. DynamoDB), it may not be changed until a new version of link data is released.

To ensure internal linking state is shared across locales of a given hostname, when raw link data is generated, the links for the primary locale may be reusable for secondary locales within a market; the data model may contain denormalised parameters to allow for translations across locales.

To ensure a new state is only generated on request, new link-data may be stored in an intermediate bucket; new link-data may only be added to the linkservice (e.g. Simple Storage Service (S3), e.g. Amazon Simple Storage Service, the link database (e.g. DynamoDB)) when a new version is (e.g. manually) created.

To ensure a state may be accessible for review/analysis, the bucket containing versioned data may be accessible by analytics applications when required.

To ensure a state should support import/export, data may be exportable/downloadable for offline analysis; it may be possible to import data from different sources, with potentially more sources added in future; Raw data contains enough information to satisfy the data model.

To ensure the number, order and text of tabs are configurable (tabs are top level groups of links), the data model may contain a field for tab group; the data model may store tab order.

To ensure if link state contains links of multiple page types we are able to group links by section (a section is a subtitled group of links), the data model may contain an optional field for a section.

### Possible Product Attributes

A fast and simple process for taking link data from multiple sources and showing them on the principal web pages of a website, e.g. SEO landing pages.

Supporting the release of internal links provided by external parties (e.g. agencies) to multiple markets.

Enabling a website to serve its own internal links.

Enabling a development team to experiment with internal linking.

Providing release and rollback capabilities for new Internal Linking States.

### Possible Design Attributes

The core infrastructure for linking is optimised for requests: as these links are served on principal web pages of a website, e.g. SEO landing pages, where core web vitals are critical, fast performance must be provided.

The core infrastructure for linking supports bulk updates of internal linking data, for example it may be required to ingest, store and release at least one million (e.g. at least two million), internal links at once. The core infrastructure for linking supports bulk updates of internal linking data, for example it may be required to ingest, store and release at least one thousand internal links at once, or at least ten thousand internal links at once, or at least one hundred thousand internal links at once.

The core infrastructure for linking prefers automation over manual processes: Ingestion from in-house and/or external parties (e.g. agencies) is automated where possible.

The core infrastructure for linking provides managed releases to production: Stakeholders are able to review new link states before release.

The core infrastructure for linking provides a scalable storage method: it may scale significantly to handle the release of new page types and new internal links.

The core infrastructure for linking is Cost effective: Solutions using a database (e.g. DynamoDB) for links can become expensive quickly.

The core infrastructure for linking includes versioning built into the data model: an example requirement is the capacity to rollback releases to a previous state; to avoid 'emergency' rollbacks, rolling back may be a simple process.

The core infrastructure for linking supports inclusion of (e.g. SEO) text configured by an internal (e.g. SEO) team and/or external parties (e.g. agencies); Keywords are a key part of internal linking and therefore need to be managed (e.g. by SEO team/Agencies) and enabled by the website owner.

### Link Generation

Relevant Technical Requirements are that new link-data may be stored in an intermediate bucket; Raw data should contain enough information to satisfy the data model.

### Link data ingestion and validation

Relevant Technical Requirements are that when raw internal linking data is ingested we may be able to validate it by the following rule: Links contained on a donor page don't contain a (circular) link to the donor page itself; Links contained on a donor page all share the same TLD as the donor page itself; The recipient page pointed to by the link is valid (e.g. 200 code generated, not 4xx 5xx codes generated).

Relevant Technical Requirements are that Link validity may be cached so that popular recipient pages aren't overly requested (e.g. spammed) with validity checks.

Relevant Technical Requirements are that we may be able to import data from different sources with potentially more sources added in future.

### Data model

Relevant Technical Requirements are:
- The data model may define which links appear on a donor page
- The data model may have an anchor text field
- The data model may contain denormalised parameters to allow for translations across locales
- The data model may contain a field for a tab group
- The data model may store a tab order
- The data model may contain an optional field for a section.

### Data storage and versioning

Relevant Technical Requirements are:
- Link data state may be versioned
- The link-service database (e.g. DynamoDB) may be configurable to serve a previous version
- Once data is stored in link-service database (e.g. DynamoDB) it may not be changed until a new version of link data is released
- New link-data may only be added to the link-service (e.g. S3, DynamoDB) when a new version is (e.g. manually) created
- Data may be exportable/downloadable for offline analysis.

### Link service API

Relevant Technical Requirements are:
- A bucket containing versioned data may be accessible by analytics applications when required.
- Ability is provided to maintain an 'Internal Linking State' that may enable rolling back to a previous state.
- Changes to the 'Internal Linking State' may be driven by a (e.g. SEO) team.
- Highlighting that link text updates may be separate and may use a separate process.

### Solution Examples

Regarding external suppliers of links, for Pre-Ingestion, an Automated process is provided, e.g. triggered by upload of new agency files (e.g. for SEO). Validation of urls and keywords is carried out. Failed validation for any values creates feedback to external suppliers of links (e.g. SEO agencies) with any incorrect data highlighted. Success leads to the output of the external supplier (e.g. agency) files (e.g. to s3) for uploading to data store. For Ingestion, there is provided a (e.g. manually) triggered process that reads new link data, updates the data store and maintains the previous link state. For storage, storage is provided in the database (e.g. DynamoDB), with link groups as children within a page instance item. Page instances can store link groups generated inhouse and by agencies side by side.

For delivery, the solution is served via a unified link-service endpoint.

Regarding links supplied by the website operator itself, for Pre-Ingestion, an Automated process is provided, in which the files are typically much larger than in prior approaches, and which in an example stores all data for a structured, e.g. market_locale_pagetype_group-name, combination. A second step is to generate URLs via a Uniform Resource Locator (URL) management system (UMS) and for example to convert related csv files into json files to store (e.g. in s3) ready to be uploaded to the data store. For Ingestion, a (e.g. manually) triggered process is used that reads new link data, updates the data store and link state, and maintains the previous link state. For Storage, Storage is provided in the database (e.g. DynamoDB), with link groups as children of a page instance item. Page instances can store link groups generated inhouse and by external suppliers (e.g. agencies) side by side. For delivery, the solution is served via a unified link-service endpoint.

### Summary of Steps in an Example System and Method for Internal Linking Core Infrastructure

### Step One: Generate Raw Data

In an example there are two sources of raw link data, in-house and external e.g. agency. A pipeline is provided for producing links in-house. The output is files containing groups of links to be displayed on different page instances. External parties (e.g. agencies) may provide pre-generated urls; the internal in-house process may produce UMS parameters.

An example data format for in-house links is comma-separated values (CSV) files with the naming convention:
{market}/{locale}/{donor_page_type}/ {group_name}/{partition_id}.csv e.g. uk/en-gb/flights-to-city-airport/flights-to-country/{partition_id}.

Here, the Csv file contains links to flights-to-country pages to be displayed on the flights to city airport pages in the uk market.

Example file contents are:
donor_page_params, country_code
country_code=uk, de
country_code=mx, fr
country_code=uk, mx
country_code=fr, us

The format of external (e.g. agency) data matches the structure we have chosen for our data model, but requires validation.

In an example, the files are json and the names are the encoded urls of the page the links are being displayed on.

### Example file contents

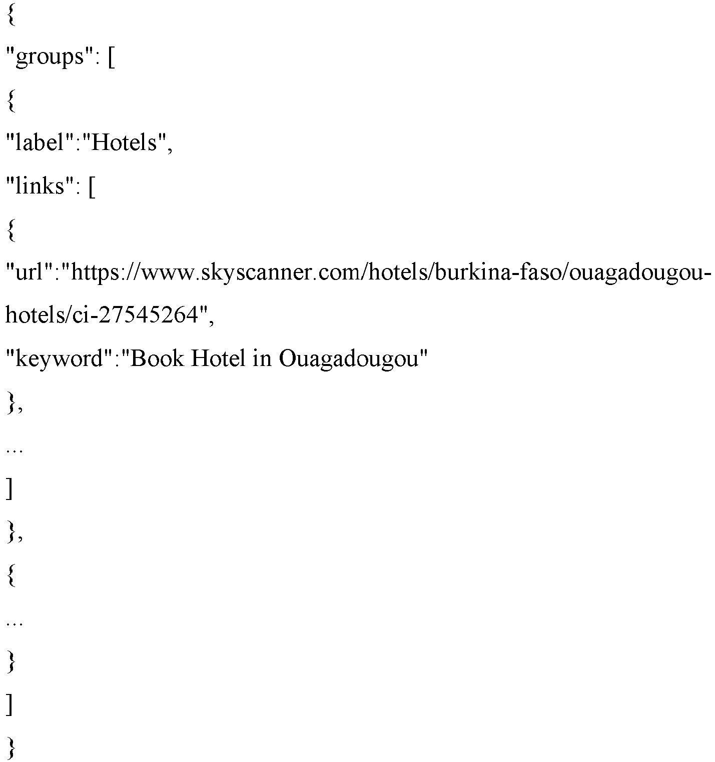

### Step Two: Convert Raw Data into Ingestable Format

In an example, before ingesting updates into the data store, both internal and external data sets need some processing. Specifically:
- External (e.g. agency) data needs to be validated.
- In-house data needs to be converted from UMS parameters into URLs.
- Both sets of data may be written to dynamo json, i.e. in DynamoDB submitted in json, and/or stored in json.
- External (e.g. agency) data that fails validation will be returned to the external party (e.g. agency) with errors logged.
- In-house data that fails conversion generates alert(s) with errors logged.

Updates may be stored (e.g. in s3), e.g. with the timestamp of the data generation, e.g. as the prefix.

### Step Three: Ingest Data Into Data Store

This step may be triggered (e.g. manually), and releases a new 'Link State' ingesting the update into the database (e.g. DynamoDB). A high level overview of an example process is:
1) Trigger directed acyclic graph (DAG), passing in new version number and a timestamp matching the prefix (e.g. in s3) containing the update data
2) Get update data (e.g. from s3)
3) Identify relevant (e.g. {market}_{locale}_{page-type}) tables that are being updated (e.g. a table for each combination).
4) Retrieve latest version of identified tables (e.g. from s3 store)
5) Put updates to file
6) Write (e.g. to s3) as new version (e.g. with timestamp as suffix)
7) Import new files to database (e.g. DynamoDB) (e.g. using import from s3 functionality), creating a new table with the naming convention, e.g. {market}_{locale}_{page-type}_{timestamp}.

The files in the (e.g. s3) data store are in one-to-one (1:1) correspondence with a table in the database (e.g. DynamoDB). DAG may be connected to ETL as a process.

### Step Four: Update Table Versions

To keep track of the latest version of each table, a new version entry is created for each release in the versions metadata table. DyanmoDB uses Tables. Each Table has its own schema. It may be possible to batch import Tables into the database. Old

Table versions may be stored in the database (e.g DyanmoDB).

An example process includes as follows:
1) Retrieve latest version (e.g. json blob, key:value)
2) Put changes
3) Add new version entry

In an example, the key value pairs in the version table are:
uk_en-gb_routes-from-to: "1664283071"

### Step Five: Use New Version in application programming interface (API)

The final step of the DAG is to propagate the latest iteration of the version metadata table to the link-service API, which is part of the backend. The final stage of the release process is a (e.g. manual) update to the configuration service. Two advantages from this part of the process are:
1) Allows testing of the new internal link state before release
2) Fast, easy rollback solution via the configuration service

The table response may be cached in the link-service to ensure we don't need to make two requests to the Link Store each time, reducing the response time of the API.

### More detailed explanation of each step

### Step One: Generate Raw Data

In an example, there are two sources of data for internal links: In-house and external (e.g. 3rd party). In an example, the data format is provided for in-house is csv files with a naming convention, e.g. including a dimensional structure, eg.:
{market}/{locale}/{page_type}/{group_name}/{partition_id}.csv ({partition_id} may define how data is stored, such as in separate data blocks.) Each file contains a list of parameters e.g. for a given market, locale, page type, group combination. These can be used in requests to the URL Management Service (UMS) to create into a usable link. These may be converted over to a particular file format and schema. This can be done by including an extract, transform, load (ETL) step in the flow to allow us to have the correct file format and data ready for the data store. More of this is explained in step two.

The external (e.g. 3rd party) data is provided in a consumable format but lacks meta data. It may be stored under the file name of the url. An example file is:

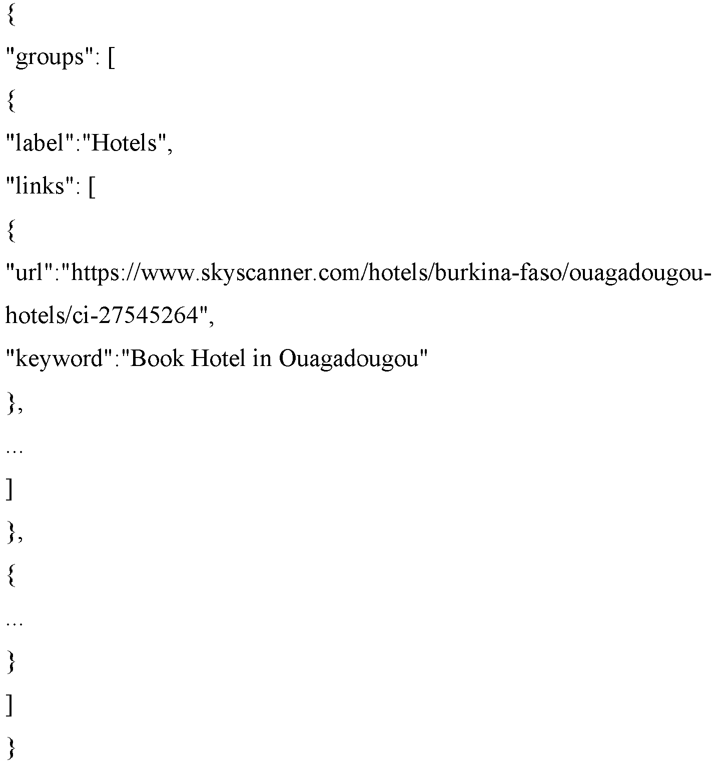

An ETL task is provided to convert the data into the correct format and schema.

How does ETL work?

Extract, transform, and load (ETL) works by moving data from the source system to the destination system, e.g. at periodic intervals. An example ETL process includes three steps:
1) Extract the relevant data from the source database;
2) Transform the data so that it is better suited for analytics;
3) Load the data into the target database.

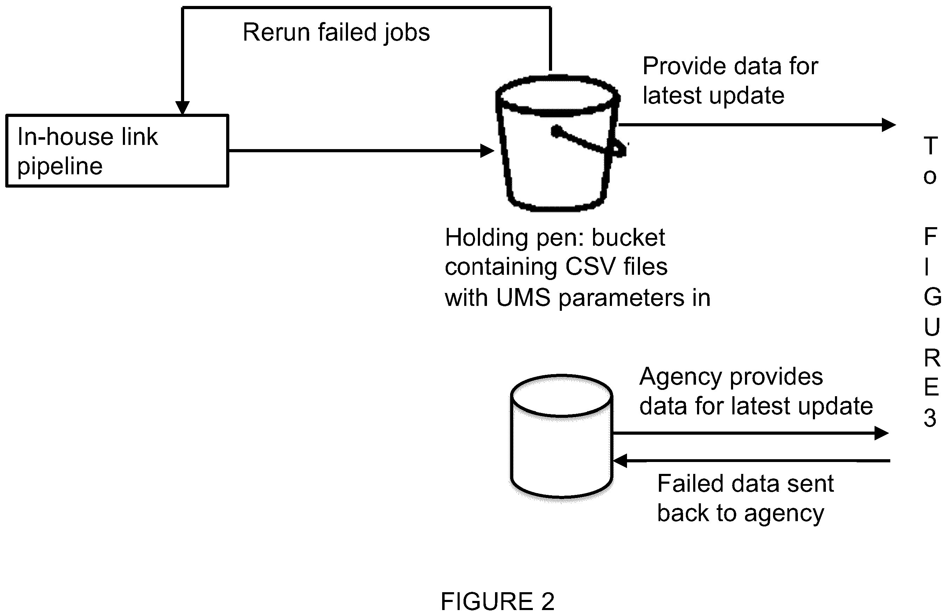

In an example of Step One, an in-house link pipeline provides links to a holding pen, which is a bucket containing CSV files with UMS parameters in. The holding pen provides data for the latest update of in-house generated links on the website. If the holding pen identifies failed jobs, these are sent back to the in-house link pipeline. A third party (e.g. agency) provides link data for the latest update of third party links on the website. Failed data is sent back to the third party (e.g. agency). An example is shown in **Figure 2****.**

### Step Two: Convert Raw Data into Ingestable Format

In an example, the link data may come from at least two sources, external (e.g. 3rd party) and in house. Data from both sources need to be extracted, transformed and pushed (e.g. into a S3 bucket) so it can be loaded into the datastore. In an example, the external (e.g. 3rd party) data is already in a consumable json format, but does not contain any meta data link tab grouping and needs to be transformed. In an example, the in house solution is in a parameterized format which needs to call UMS to convert it into useful data. This means that we may need two additional ETL steps to push the data ready to be ingested in the data store.

The raw data from both the external (e.g. agencies) and in house solutions may be combined into an update to each page instance. This may include:
1) Data validation - rules by which external (e.g. agency) data is either accepted for transformation or rejected. The data validation process is automated and runs as soon as new agency data is submitted. This means that external (e.g. agencies) receive rejected data straight away.
2) Internal linking state - a list of which recipient pages are linked to per donor page. The data stored (e.g. in S3) is the single source of truth for this, but it is served to clients of the link service via the database (e.g. DynamoDB). This may be versioned as described in stage four.
3) Data transformation - the process by which data entries in the format described in the data definition are created from the raw data generated internally or by external parties (e.g. agencies).

Each source may have its own ETL that loads data into an updates bucket. This may be a one to one mapping of a page instance's table. This allows in later stages for the tables of a given page instance to be overwritten.

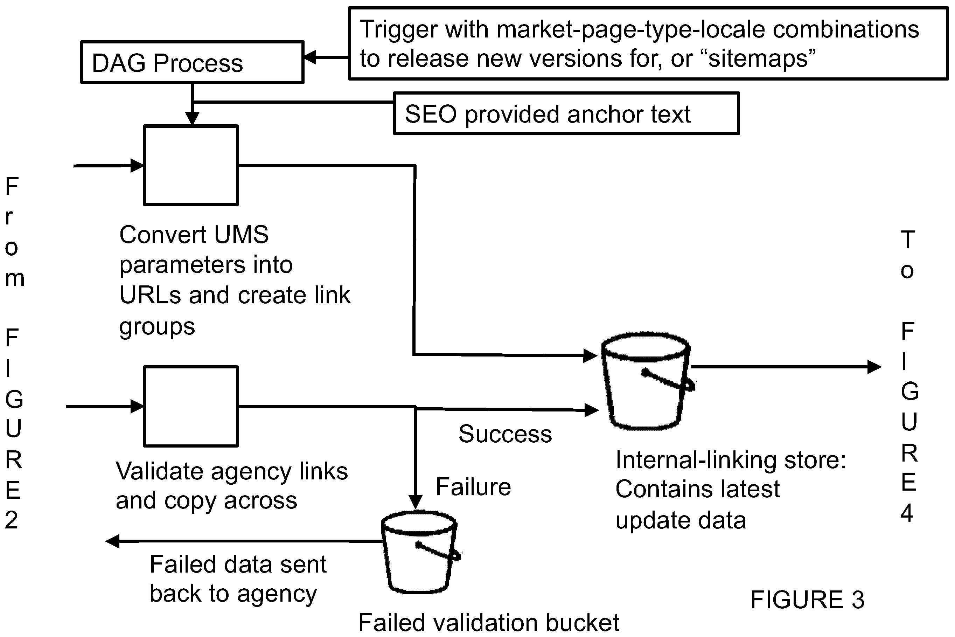

In an example of Step Two, a trigger with market-page-type-locale combinations to release new versions for, or "sitemaps", is received by a DAG process. Anchor text (e.g. provided by a SEO group) may be added to the DAG process output, then using the data corresponding to in-house links, UMS parameters are converted into URLs to create link groups, which are passed to an internal linking store, which contains the latest update data. Received third party (e.g. agency) links are validated, and if the validation fails, the failed data may be put into a validation bucket and then sent back to the third party (e.g. agency). When the received third party (e.g. agency) links are validated, if the validation succeeds, link data is sent to the internal linking store, which contains the latest update data. An example is shown in **Figure 3****.**

### Step Three: Ingest Data Into Data Store

Once the update data is put into the (e.g. S3) internal linking store, it is held there until a new link orchestration is triggered (e.g. by a SEO team). A trigger can be pushed (e.g. by a SEO team), which then starts a batch job pushing the update data (e.g. to another bucket) which has a one-to-one (1: 1) mapping of the database (e.g. DynamoDB) datastore. This data can then be directly imported into the database (e.g. DynamoDB) using the import feature. The data (e.g. from the updates bucket) needs to be transformed e.g. into the one-to-one (1: 1) bucket.

The database (e.g. DynamoDB) may be chosen according to:
- Faster read times preferred - The database backend will be queried multiple times a second, and any delay would affect website (e.g. Skyscanner) customer experience negatively.
- Intuitive implementation of data definition - For developer experience, the easier the schema is to understand the better
- A managed service - a standard practice may be that a squad (e.g. technical SEO) will manage the link-service. Any additional effort saved by using an (e.g. Amazon Web Services, Inc. (AWS)) managed solution allows the squad to dedicate more resources to other technical SEO work.
- Being cost effective.

The use of a database (e.g. DynamoDB) can be summarised in the following points):
- Programmatic interaction may be achieved using boto3 library in python, where boto3 is a standard library in python.
- All reads from the link-service may be single item look-ups by URL, for example because a single link may be used. The schema may have a simple primary key of the URL partition key only; use of a partition key relates to the size of the accessed stored data. For the example of a DynamoDB database, GetItem is the most efficient way of getting a single item of data. The API may use a query similar to the following example, where "Key" relates to a partition key:

```
        {
        TableName: "{market}_{page-type}_{locale}_{timestamp}",
       Key: {
        "URL": "{donor-url}"
        }
        }
```

- The link-state is stored in (e.g. in S3) link-data-store in e.g. JSON or Amazon ION (a superset of JSON that is binary encodable) format after raw data is transformed and ingested.
- The link-data-store data structure is a one to one mapping with tables in the database (e.g. DynamoDB) e.g. uk/en-gb/routes-from-to/1664283071.json contains the data for table uk_routes-from-to_en-GB_1664283071.
- A separate table of versions that sets which tables should be used for a given version allows updating and rollback of link state. See Data Versioning section for more example details.

In an example, the following database (e.g. DynamoDB) data schema has been chosen:
Table name: The table name is made up of:

```
 <market>-<locale>-<page type>-<timestamp>
```

Where:
market: Market of the page instance
locale: Locale of the page instance
page_type: Page type of the page instance
timestamp: timestamp that the ingestion job started for that given ingestion. This allows versioning to be adapted.

### Schema

An attribute is Page Instance URL (Partition key), and the Type is String.

An attribute is Groups, and the Type is Array of Group.

### Group

An attribute is Group Text, and the Type is String.

An attribute is Links, and the Type is Array of Link.

### Link

An attribute is url, and the Type is String

An attribute is link text, and the Type is String

An attribute is section text, and the Type is String

An attribute is denormalised parameters, and the Type is Key/value pairs of parameters for placeholders.

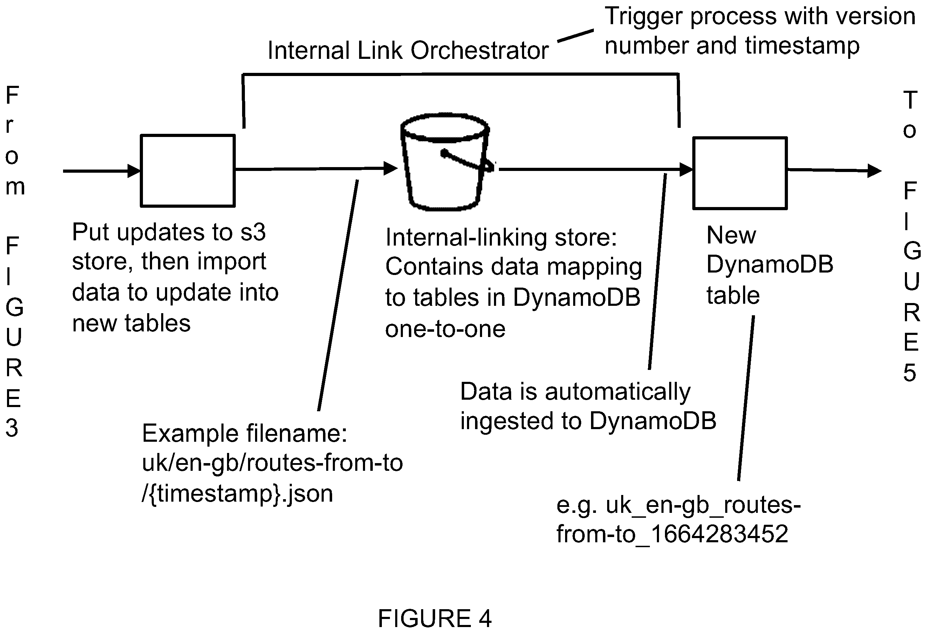

In an example of Step Three, the latest update data is received from the internal linking store, updates are put to a (e.g. s3) store, then data is imported to update into new tables. An example filename is uk/en-gb/routes-from-to/{timestamp}.j son. The internal linking store contains data mapping to tables in DynamoDB one-to-one. This data is then automatically ingested to DynamoDB, to a new DynamoDB table, of which an example is uk_en-gb_routes-from-to_1664283452. A process may be triggered with a version number and timestamp, and then an internal link orchestrator may carry out the process including updates being put to the (e.g. s3) store, then data being imported to update new tables, and data being automatically ingested to DynamoDB, to the new DynamoDB table. An example is shown in **Figure 4****.**

### Step Four: Update Table Versions

In an example, upload of Tables is performed using a single instruction. This is an advantage over updating links individually, which requires many instructions to update many data elements. A new Table is retained for each respective Table update. A (e.g. S3) update is a low cost way of importing bulk data. This limits storage use, since only new Tables need to be stored for each bulk update. Some recent versions of old Tables (e.g. 2 or less, 3 or less, 5 or less, or 10 or less) may be retained, and other versions of old Tables may be deleted. Creating a new Table is cheaper than modifying an old Table, because modifying an old Table requires many instructions to update many data elements.

In an example, data for internal links can come from multiple internal and external (e.g. 3rd party) sources. Because of this, it may be desired (e.g. by a SEO team) to test and rollback links if a new set of internal links does not provide the intended results, to allow issues to be fixed. To this end, the stack has been designed with version and rollback in mind. Once the data has gone through the pipeline, the ingestion buckets data for each batch into timestamp tables. Then the latest table is saved for a given market-locale-page_type in a look up table. This may work by:
- Query the configuration service with key for current version. This will return the current version.
- Query the cached local version mapper for the timestamp data. The local version is updated (e.g. by a worker) in the api, which synchronizes with a S3 bucket with version map.
- Query the datastore with the page instances url and table name joined with the timestamp (e.g. <market>-<locale>-<page_type>-<timestamp>). Return a list of links for a given page instance.

This allows us to solve two different problems: release and rollback.

While data is ingested, the release of that data may be staggered. This may happen in two stages. The first is a (e.g. manual) trigger to take data in internal linking store and push it to the database (e.g DynamoDB). This allows (e.g. the SEO team) to control when new links are displayed on landing pages by creating a new version every time the trigger is activated. Then a (e.g. SEO) team can use an override to view these changes before they are released. This is helpful as it allows the team to validate changes. Then if the team is not content with a change, they can roll back to a previous version, and then make changes with data sources and perform the process again. In an example, a cleaning service is provided, that cleans (e.g. deletes) old versions of data, e.g. therefore only keeping a subset of the previous data, e.g. around three versions of previous data, or e.g. less than five or less than ten versions of previous data.

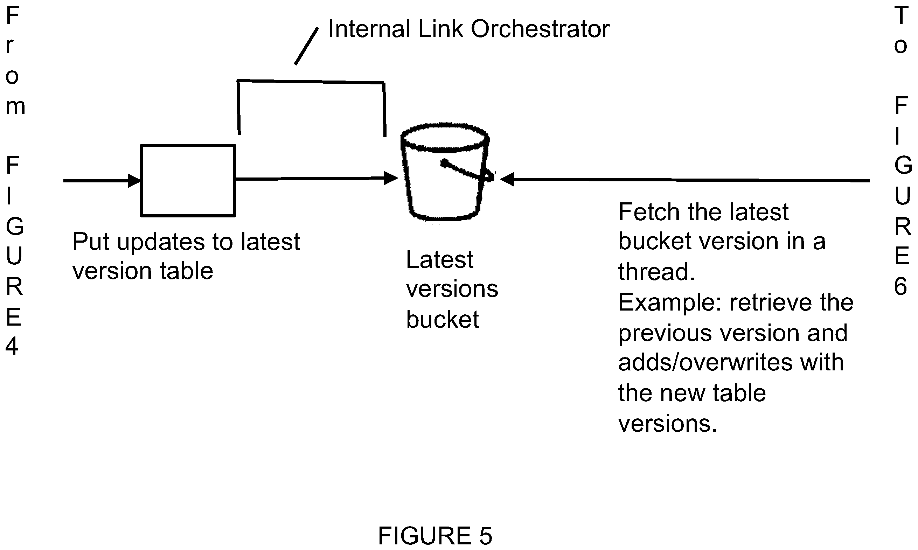

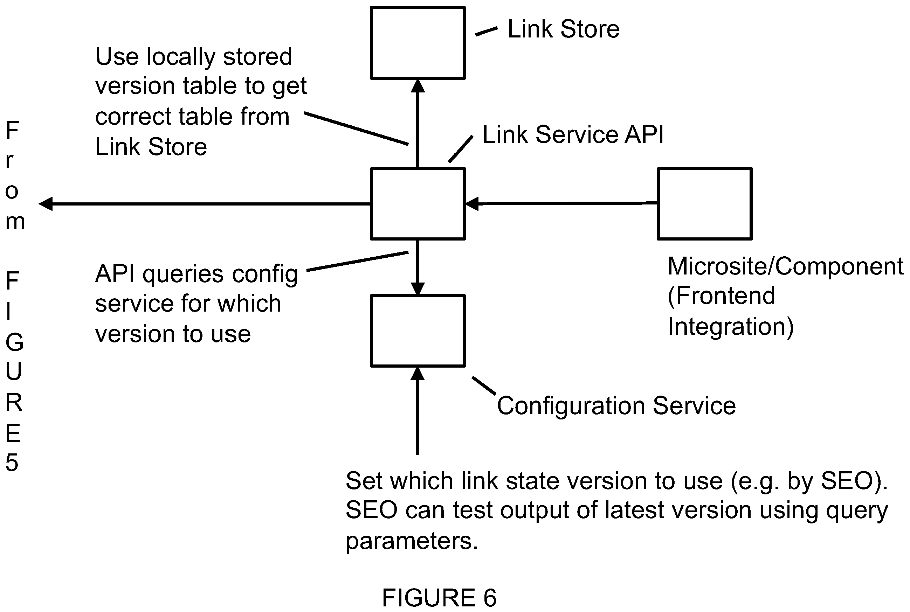

In an example of Step Four, data from a new DynamoDB table is used to put updates to a latest version table. The Internal Link Orchestrator may carry out this process so that a latest versions bucket contains the updates put to the latest version table. The latest bucket version can be fetched in a thread. In an example, retrieval is performed of the previous version, which adds/overwrites with the new table versions. A format for version metadata is a key value pair. A nested map of <table_name>: <time stamp> may be nested under a version number (e.g. v1, v2). Versions may be immutable. An example is:

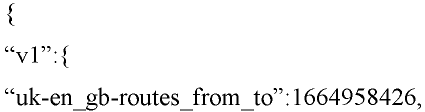

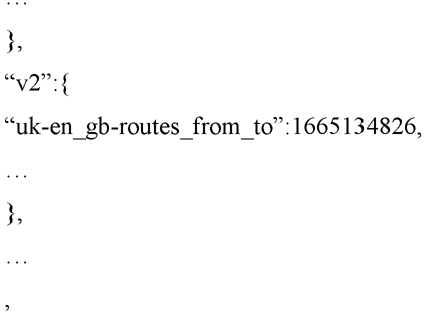

An example of Step Four is shown in Figure 5.

### Step Five: Use New Version in application programming interface (API)

In an example, the API is part of the backend, in the deep backend. The backend is in connection with the front end. The API makes links available to the front end.

Firstly, lets describe an example of the API. The API allows frontend services to be served links from the data store. An endpoint is provided such that a deprecation of an original endpoint can be done. The provided endpoint may follow the sequence as per the example of Figure 6.

The api may have a /v2/links gRPC endpoint. gRPC (gRPC Remote Procedure Calls) is a cross-platform high performance remote procedure call (RPC) framework.

An example request body may contain:
If the Name is url, then the Type is String, and the description is the url of a given page instance that a link is being called for.
If the Name is market, then the Type is String, and the description is e.g. UK. This may map to a (e.g. Skyscanner) TLD such as Skyscanner.net.
If the Name is locale, then the Type is String, and the description is e.g. en_gb. The locale of the page.
If the Name is locale, page_type, then the Type is String and the description is e.g. routes_from_to The SEO page type.
If the Name is version, then the Type is optional int, and the description is version of the data, allows testing and backwards compatibility.

In proto format:
A Request Example is:

```
        syntax = "proto3"
        message LinksRequest {
        string url = 1;
        string market = 2;
        string locale = 3;
        string page_type = 4;
       int version = 5; // optional
        }
```

Where the response would be an array of groups, for example as described below:
If the Name is group_text, then the Type is String, and the description is Placeholder for group text.
If the Name is links, then the Type is Array, and the description is an array of link data (see below).

### Link

If the Name is url, then the Type is String, and the description is url to page instance for the given link.

If the Name is link_text, then the Type is String, and the description is Place holder text for hyperlink text.

If the Name is section_text, then the Type is String, and the description is Place holder text for section title text.

If the Name is parameters, then the Type is String, and the description is key value map of values for placeholders.

In proto format:
A Response Example is:

```
        syntax = "proto3"
        message LinksResponse {
        repeated Group groups = 1;
        }
        message Group {
        string group_text = 1;
       repeated Link links = 2;
        }
        message Link {
        string url = 1;
        string link_text = 2;
        map<string, string> parameters = 3;
        string section_text = 4; // optional
        }
```

When the gRPC endpoint receives a request, it will or it may:
1. Check the configuration service for the most recent version if no version specified in request
2. Get the table name for the market_locale_page-type combination
3. Use Java Amazon Web Services (AWS) software development kit (SDK) v2 to build a query that will get item with corresponding from that table
4. Package a gRPC response according to the schema defined above and send it to the client.

In an example of Step Five, the Link Service API may fetch the latest bucket version in a thread. In an example, retrieval is performed of the previous version, which adds/overwrites with the changed table versions. The Link Service API may use a locally stored version table to get the correct table from the Link Store. The Link Service API may receive input from a microsite/component, for frontend integration. The Link Service API may query a configuration service about which version should be used. The configuration service sets which link state version to use (e.g. set by SEO group). The SEO group can test the output of latest version using query parameters. An example is shown in **Figure 6****.**

### Example Data Definition & Model

### Example Data Definition

To allow the front end to create cross linking on its pages, a data definition is used which allows us to serve this use case. This includes page instances and links.

### Page instance

A page instance is a single landing page for the (e.g. Skyscanner) website which is served e.g. by Falcon. (Falcon is a Python web framework designed for building fast Representational state transfer (REST)-ful APIs with minimal external dependencies). This contains the metadata about the page:
- Market - The market for the given page.
- Locale - The locale (language) a given page.
- URL - the canonical URL of the given page.
- Page type - The page type a given page.

### Link

On a given page, there are a number of links, which are linked to other page instances. These contain metadata of:
- Group - The name of the group (or tab) which the link belongs to.
- Link Text - The hyperlink text for a given link.
- Section - The section title text the link belongs to.
- Page type - The page type of a given page.
- Denormalised Paramaters - Parameters to fill data in placeholder text.

With the data above, we create a highly read optimised solution that has a low write cadence. This means that we are unconcerned with space efficiency or redundant data. With this in mind, we create the following data definition for the database (e.g. DynamoDB).

### Data Model

Table name
<market>-<locale>-<page_type>-<timestamp>

Where:
- market: Market of the page instance
- locale: Locale of the page instance
- page_type: Page type of the page instance
- timestamp: timestamp that the ingestion job started for that given ingestion. This allows versioning to be adapted.

### Schema

If the Partition Key is Page Instance URL, then the Attributes are Groups.

If the Partition Key is String, then the Attributes are Array of Group.

### Group

If the Attribute is Group Text, then the Type is String.

If the Attribute is Links, then the Type is Array of Link.

### Link

If the Attribute is url, then the Type is String

If the Attribute is link text, then the Type is String

If the Attribute is section text, then the Type is String

If the Attribute is denormalised parameters, then the Type is Map of any parameters.

### Data Store

In an example, during the decisioning process, several constraints are set that inform which database backend is used for the link-service:
- Faster read times preferred - The database backend is queried multiple times a second, and any delay would effect website (e.g. Skyscanner) customer experience negatively.
- Intuitive implementation of data definition - For developer experience, the easier the schema is to understand, the better.
- A managed service - A team manages the link-service.
- Cost effective.

Though several database solutions are possible, DynamoDB and Aurora RDS were the two main contenders. The schema in DynamoDB maps more intuitively to the raw JSON link data, and look-up by URL may be built into the solution by making URL the partition key.

The use of DynamoDB can be summarised in the following points:
- Programmatic interaction may be achieved using boto3 library in python.
- All reads from the link-service may be single item look-ups by URL. The schema has a simple primary key of the URL partition key only. GetItem is typically the most efficient way of getting a single item of data. The API may use a query similar to the following example:

```
        {
        TableName: "{market}_{page-type}_{locale}_{ datetime-created} ",
       Key: {
        "URL": "{ donor-url}"
        }
        }
```

- In an example, the link-state is stored in (e.g. S3) link-data-store in JSON or Amazon ION (a superset of JSON that is binary encodable) format after raw data is transformed and ingested.
- The link-data-store data structure may be a one to one mapping with tables in DynamoDB e.g. uk/en-gb/routes-from-to/1664283071.json contains the data for table uk_routes-from-to_en-GB_1664283071.
- A separate table of versions that sets which tables should be used for a given version allow updating and rollback of link state. See Data Versioning section for more example details.

With the above points in mind, the design of the API may have the following sequence of requests and responses between the different services:

### Data Ingestion

Example Important concepts for data ingestion include
- Raw data - the data generated externally (e.g. by agencies) or internally
- Data validation - rules by which external (e.g. agency) data is either accepted for transformation or rejected. The data validation process is automated and runs as soon as new external (e.g. agency) data is submitted. This means that external party (e.g. agency) sees rejected data straight away.
- Internal linking state - a list of which recipient pages are linked to per donor page. The data stored (e.g. in S3) is the single source of truth for this, but it is served to clients of the link service via database e.g. DynamoDB. This may be versioned as described in the version control section.
- Data transformation - the process by which data entries in the format described in the data definition are created from the raw data generated internally or externally (e.g. by agencies).
- DynamoDB Ingestible formats - The internal linking state is stored (e.g. in S3) in one of the following formats:
   - CSV - Suitable if all data is in string format and the data structure is flat. Not used for link data as we have a nested data schema.
   - DynamoDB JSON - Similar to a standard JSON dictionary but values are replaced with {key: value} objects where the key is the type.
   - Amazon ION - A richly typed superset of JSON that is also binary encodable for compression
- DynamoDB - The link service backend DB described in the data store section.

When new data is created externally (e.g. by agencies) it may be stored in a "holding pen" bucket. Once a new internal linking state is ready to be created, a DAG wrapping an AWS batch job may be (e.g. manually) triggered that will begin transforming the data into the structure in the data definition and storing it in a database (e.g. Dynamo DB) ingestible format. The (e.g. manual) trigger is part of the original requirements. An automated process that runs every time new link data is available would make versioned link state impractical. Typically, a batch job is used rather than a lambda because of the volume of data (lambda's are time limited and more suitable for smaller compute constrained jobs rather than data constrained ones). The files from this may have a filename market_page-type_locale_timestamp that corresponds directly to a table in the database (e.g. DynamoDB). Once all these files have been written to (e.g. the S3 part of) the data store, the database (e.g. DynamoDB) tables will be updated. The update to database (e.g. DynamoDB) tables may be as follows:
1) For each new file 'market_page-type_locale_timestamp' written (e.g. to S3), ingest the file into the link-data database (e.g. DynamoDB) instance as a new table with the same name as the file.
2) Add a new version to the version database (e.g. DynamoDB) that is a copy of the previous version except for tables with the updated prefix 'market_pagetype_
   locale'. In the new version entry, these will have the updated timestamp suffix instead.
3) If we wish to start using the new version right away, the config store is updated so that "current_link_state_version" stores the newly added version identifier.

It may be a requirement of this design that external (e.g. agency) data contains at least the minimum amount of data required in the data definition. (AWS Lambda is a serverless, event-driven compute service that permits running code for a broad set of types of application or backend service without provisioning or managing servers. Lambda can be triggered from over 200 AWS services and software as a service (SaaS) applications).

### Migration

The system provides at the API level two functions, one for getting the count of total links on a page and one for getting links by donor URL.

For the functional area API, the end point returns link data in the new structure. Link count is available.

For the functional area TRANSFORMATION OF LINK DATA, UMS parameters may be used to generate URLs in a DAG process. An external party (e.g. agency) provides data.

For the functional area STORAGE OF LINK DATA, data state is stored (e.g. in S3) with all links mapped to donor URLs. A database (e.g,. DynamoDB) ingestable format may be used.

For the functional area VERSIONING, link state is versioned. Version of link state served by API is configurable, so rollbacks are possible.

The system and method allow us to more effectively use storage space which is cheap, instead of read times and computing resources which are more expensive.

This is achieved by storing the data in a format that has the links associated with a URL already expanded and ready to be served from the database (e.g. DynamoDB) instance. In the design, versioning may be present.

A migration from previous data formats may be performed with a one off batch job that runs the transformation routines.

### Example Language and Frameworks

Java may be used for link service API, and python may be used in the AWS batch jobs. Both languages have a rich ecosystem of AWS integrations.

AWS batch jobs may be used because they perform better than lambdas or other similar technologies for potentially long running tasks. These jobs may be wrapped in DAGs.

### Metrics and Logging

New Relic (supplied by New Relic, Inc., 188 Spear St, Suite 1000, San Francisco, CA, USA 94105) may be used to log:
- Rejected links - Log source and reason for rejection. These logs may be used to discern if rejected links have since been updated and resubmitted.
- When a new version is released
- Creation, ingestion, and deletion of mapping tables
- When latest versions are fetched by link service API
- Unsuccessful queries to API and reason therefor.
- Updates to version table, e.g. to make sure these only happen when (e.g. manual) version update is triggered.

### Deployment

The deployment of the service may include three parts:
- Data ingestion side may be deployed by using (e.g. apache Airflow) to create batch jobs.
- Database (e.g. DynamoDB) may be deployed using cloudformation.
- The api may be deployed in a Kubernetes infrastructure.

All deployments may be started from merging of pull requests in GitHub.

### Data pipeline

The data pipeline may be deployed by creating a new batch job (e.g. in Apache Airflow). This may be done by uploading a container image e.g. to Amazon Elastic Container Registry (AWS ECR) and running a batch job with that image using the normal deployment for (e.g. Skyscanner) Airflow. This may only need to be in a single geographic region to push to a primary database.

### Database and object storage (e.g. DynamoDB & S3)

The Database (e.g. DynamoDB) datastore and object storage (e.g. S3) may be deployed e.g. using AWS CloudFormation. The Database (e.g. DynamoDB) instances may be multi region with multiple AZ zones for redundancy. It may be that one region holds the primary database which will then push using Synchronous Replication to read replicas.

### API

The api may be deployed using Github Actions and slingshot and may be manifested to Kubernetes (k8s) in website (e.g. Skyscanner) infrastructure (Kubernetes is an open-source container orchestration system for automating software deployment, scaling, and management). This may be multi region to allow faster request times in different geographic regions.

### Monitoring and Alerting

In an example, New Relic is used. Alerts are generated for example when:
- 500 errors occur.
- No table is found for market_locale_page-type
- A request takes longer than baseline time.

### Amazon S3 or Amazon Simple Storage Service

Amazon S3, or Amazon Simple Storage Service, is a service offered by Amazon Web Services (AWS) that provides object storage through a web service interface. Amazon S3 uses the same scalable storage infrastructure that Amazon.com uses to run its e-commerce network. Amazon S3 can store any type of object, which allows uses like storage for Internet applications, backups, disaster recovery, data archives, data lakes for analytics, and hybrid cloud storage. AWS launched Amazon S3 in the United States on March 14, 2006, then in Europe in November 2007.

### Amazon DynamoDB

Amazon DynamoDB is a fully managed proprietary NoSQL database service that supports key-value and document data structures and is offered by Amazon.com as part of the Amazon Web Services portfolio. DynamoDB uses synchronous replication across multiple data centers for high durability and availability. DynamoDB was announced by Amazon CTO Werner Vogels on January 18, 2012, and is presented as an evolution of Amazon SimpleDB. A NoSQL (originally referring to "non-SQL" or "non-relational") database provides a mechanism for storage and retrieval of data that is modeled using relations other than the tabular relations used in relational databases.

### JSON (JavaScript Object Notation)

JSON (JavaScript Object Notation) is an open standard file format and data interchange format that uses human-readable text to store and transmit data objects consisting of attribute-value pairs and arrays (or other serializable values). It is a common data format with diverse uses in electronic data interchange, including that of web applications with servers.

JSON is a language-independent data format. It was derived from JavaScript, but many modern programming languages include code to generate and parse JSON-format data. JSON filenames use the extension .json.

### Amazon Ion

Amazon Ion is a data serialization language developed by Amazon. It may be represented by either a human-readable text form or a compact binary form. The text form is a superset of JSON; thus, any valid JSON document is also a valid Ion document.

### Representational state transfer (REST)

Representational state transfer (REST) is a software architectural style that was created to guide the design and development of the architecture for the World Wide Web. REST defines a set of constraints for how the architecture of an Internet-scale distributed hypermedia system, such as the Web, should behave. The REST architectural style emphasises the scalability of interactions between components, uniform interfaces, independent deployment of components, and the creation of a layered architecture to facilitate caching of components to reduce user-perceived latency, enforce security, and encapsulate legacy systems.

REST has been employed throughout the software industry and is a widely accepted set of guidelines for creating stateless, reliable web APIs. A web API that obeys the REST constraints is informally described as RESTful. RESTful web APIs are typically loosely based on HTTP methods to access resources via URL-encoded parameters and the use of JSON or XML to transmit data.

## Claims

1. A computer-implemented method of updating links in a website backend with updated links, wherein the updated links in the website backend are made available to a website frontend in communication with the website backend, the method including the steps of:
(i) storing or accessing a multi-dimensional data structure, comprising at least two dimensions, the multi-dimensional data structure including data receiving elements, each data receiving element uniquely identified by a respective address in the multi-dimensional data structure;
(ii) receiving update link data including parameters, and using the parameters to enter groups of links into the data receiving elements to produce updated data receiving elements;
(iii) putting the updated data receiving elements into a data store, in a data store format, the data store including data mapping the updated data receiving elements in the data store to database tables, wherein the database tables are in one-to-one correspondence with the updated data receiving elements in the data store;
(iv) storing new database tables using the data mapping the updated data receiving elements in the data store to the database tables, and ingesting the new database tables to a database, and recording the ingested new database tables in a table of latest versions;
(v) using the table of latest versions to obtain latest database tables from the database, and updating the links in the website backend using the latest database tables from the database, wherein updating the links in the website backend using the latest database tables from the database includes updating at least ten thousand links, and
(vi) the website backend making available the updated links in the website backend to the website front end, in which the website frontend is in communication with the website backend, wherein the backend includes page instances, in which each page instance includes metadata relating to the page, including data relating to an address, or to a group of addresses, associated with the page, in the multi-dimensional data structure, the backend using page instances and links included in database tables relating to the address, or to the group of addresses, to provide web pages to the front end.

2. The method of Claim 1, wherein the website is a website for travel services.

3. The method of Claim 2, wherein the travel services include flights, or hotel reservations, or car hire.

4. The method of any previous Claim, wherein the parameters define which links appear on which donor website page or pages.

5. The method of any previous Claim, wherein a respective page instance item includes respective links generated by the website owner and respective links generated by a third party.

6. The method of any previous Claim, wherein database tables are stored in the database (e.g. DynamoDB), the database tables including page instance items.

7. The method of any previous Claim, wherein link groups are children within a respective page instance item.

8. The method of any previous Claim, wherein respective groups of links are associated with respective webpage instances.

9. The method of any previous Claim, wherein the received update link data includes a respective update for respective page instances.

10. The method of any previous Claim, wherein the new database tables are stored in a format in which links associated with a URL are ready to be served from the database.

11. The method of any previous Claim, including the step of: (vii) the website frontend serving first updated links of the updated links in webpage content of a webpage, responsive to a request for the webpage.

12. The method of any previous Claim, including updating links in principal web pages of the website, e.g. search engine optimization (SEO) landing pages.

13. The method of any previous Claim, wherein updating the links in the website backend using the latest database tables from the database includes updating at least one hundred thousand links.

14. The method of any previous Claim, wherein updating the links in the website backend using the latest database tables from the database includes updating at least one million links.

15. The method of any previous Claim, wherein updating the links in the website backend using the latest database tables from the database includes updating at least two million links.

16. The method of any previous Claim, wherein steps (i) to (iv) include:
(a) Triggering a directed acyclic graph (DAG), including a new version number;
(b) Getting the link update data;
(c) Identifying relevant tables that are being updated;
(d) Retrieving a latest version of the identified tables;
(e) Putting the link updates to the retrieved latest version of the identified tables;
(f) Writing the results of step (e) as a new version;
(g) Importing files of the new version to a database, to create a new table in the database.

17. The method of any previous Claim, wherein in step (iv), tables are batch imported into the database, e.g using python.

18. A system including a website back end, a website front end, and a link updater in communication with the website backend, the link updater including a data store, a database and a table of latest versions, the system configured to update links in the website backend with updated links, wherein the updated links in the website backend are made available to the website frontend in communication with the website backend, wherein
(i) the link updater is configured to store or to access a multi-dimensional data structure, comprising at least two dimensions, the multi-dimensional data structure including data receiving elements, each data receiving element uniquely identified by a respective address in the multi-dimensional data structure;
(ii) the link updater is configured to receive update link data including parameters, and to use the parameters to enter groups of links into the data receiving elements to produce updated data receiving elements;
(iii) the link updater is configured to put the updated data receiving elements into the data store, in a data store format, the data store including data mapping the updated data receiving elements in the data store to database tables, wherein the database tables are in one-to-one correspondence with the updated data receiving elements in the data store;
(iv) the link updater is configured to store new database tables using the data mapping the updated data receiving elements in the data store to the database tables, and to ingest the new database tables to the database, and to record the ingested new database tables in the table of latest versions;
(v) the link updater is configured to use the table of latest versions to obtain latest database tables from the database, and to update the links in the website backend using the latest database tables from the database, wherein to update the links in the website backend using the latest database tables from the database includes updating at least ten thousand links, and
(vi) the website backend is configured to make available the updated links in the website backend to the website front end, wherein the backend includes page instances, in which each page instance includes metadata relating to the page, including data relating to an address, or to a group of addresses, associated with the page, in the multi-dimensional data structure, the backend configured to use page instances and links included in database tables relating to the address, or to the group of addresses, to provide web pages to the front end.

19. The system of Claim 18, configured to perform a method of any of Claims 1 to 17.

## Patentansprüche

1. Computerimplementiertes Verfahren zum Aktualisieren von Verknüpfungen in einem Website-Backend mit aktualisierten Verknüpfungen, wobei die aktualisierten Verknüpfungen in dem Website-Backend einem Website-Frontend in Kommunikation mit dem Website-Backend verfügbar gemacht werden, wobei das Verfahren die folgenden Schritte beinhaltet:
(i) Speichern einer mehrdimensionalen Datenstruktur, die mindestens zwei Dimensionen umfasst, oder Zugreifen auf diese, wobei die mehrdimensionale Datenstruktur Datenempfangselemente beinhaltet und jedes Datenempfangselement durch eine jeweilige Adresse in der mehrdimensionalen Datenstruktur eindeutig identifiziert ist;
(ii) Empfangen von Aktualisierungsverknüpfungsdaten, die Parameter beinhalten, und Verwenden der Parameter, um Gruppen von Verknüpfungen in die Datenempfangselemente einzutragen, um aktualisierte Datenempfangselemente zu erzeugen;
(iii) Stellen der aktualisierten Datenempfangselemente in einen Datenspeicher in einem Datenspeicherformat, wobei der Datenspeicher Daten beinhaltet, welche die aktualisierten Datenempfangselemente in dem Datenspeicher Datenbanktabellen zuordnen, wobei die Datenbanktabellen in Eins-zu-Eins-Entsprechung mit den aktualisierten Datenempfangselementen in dem Datenspeicher stehen;
(iv) Speichern von neuen Datenbanktabellen unter Verwendung der Daten, welche die aktualisierten Datenempfangselemente in dem Datenspeicher den Datenbanktabellen zuordnen, und Aufnehmen der neuen Datenbanktabellen in eine Datenbank und Verzeichnen der aufgenommenen neuen Datenbanktabellen in einer Tabelle für aktuellste Versionen;
(v) Verwenden der Tabelle für aktuellste Versionen, um aktuellste Datenbanktabellen aus der Datenbank zu erlangen, und Aktualisieren der Verknüpfungen in dem Website-Backend unter Verwendung der aktuellsten Datenbanktabellen aus der Datenbank, wobei das Aktualisieren der Verknüpfungen in dem Website-Backend unter Verwendung der aktuellsten Datenbanktabellen aus der Datenbank Aktualisieren von mindestens zehntausend Verknüpfungen beinhaltet, und
(vi) Verfügbarmachen, durch das Website-Backend, der aktualisierten Verknüpfungen in dem Website-Backend für das Website-Frontend, wobei das Website-Frontend in Kommunikation mit dem Website-Backend steht, wobei das Backend Seiteninstanzen beinhaltet, wobei jede Seiteninstanz Metadaten bezüglich der Seite, die Daten bezüglich einer Adresse oder einer Gruppe von Adressen, die mit der Seite assoziiert ist, beinhalten, in der mehrdimensionalen Datenstruktur beinhaltet und das Backend Seiteninstanzen und Verknüpfungen, die in Datenbanktabellen bezüglich der Adresse oder der Gruppe von Adressen beinhaltet sind, verwendet, um dem Frontend Webseiten bereitzustellen.

2. Verfahren nach Anspruch 1, wobei die Website eine Website für Reisedienste ist.

3. Verfahren nach Anspruch 2, wobei die Reisedienste Flüge oder Hotelreservierungen oder Autovermietung beinhalten.

4. Verfahren nach einem vorhergehenden Anspruch, wobei die Parameter definieren, welche Verknüpfungen auf welcher Seite oder welchen Seiten einer Geber-Website erscheinen.

5. Verfahren nach einem vorhergehenden Anspruch, wobei ein jeweiliger Seiteninstanzeintrag jeweilige Verknüpfungen, die durch den Website-Besitzer generiert werden, und jeweilige Verknüpfungen, die durch einen Drittanbieter generiert werden, beinhaltet.

6. Verfahren nach einem vorhergehenden Anspruch, wobei die Datenbanktabellen in der Datenbank (z. B. DynamoDB) gespeichert werden und die Datenbanktabellen Seiteninstanzeinträge beinhalten.

7. Verfahren nach einem vorhergehenden Anspruch, wobei die Verknüpfungsgruppen untergeordnete Elemente innerhalb eines jeweiligen Seiteninstanzeintrags sind.

8. Verfahren nach einem vorhergehenden Anspruch, wobei die jeweiligen Gruppen von Verknüpfungen mit jeweiligen Webseiteninstanzen assoziiert sind.

9. Verfahren nach einem vorhergehenden Anspruch, wobei die empfangenen Aktualisierungsverknüpfungsdaten eine jeweilige Aktualisierung für jeweilige Seiteninstanzen beinhalten.

10. Verfahren nach einem vorhergehenden Anspruch, wobei die neuen Datenbanktabellen in einem Format gespeichert werden, in dem Verknüpfungen, die mit einer URL assoziiert sind, bereit sind, von der Datenbank bedient zu werden.

11. Verfahren nach einem vorhergehenden Anspruch, das den folgenden Schritt beinhaltet: (vii) als Reaktion auf eine Anforderung für die Webseite, Bedienen von ersten aktualisierten Verknüpfungen der aktualisierten Verknüpfungen in einem Webseiteninhalt einer Webseite durch das Website-Frontend.

12. Verfahren nach einem vorhergehenden Anspruch, das Aktualisieren von Verknüpfungen in Hauptwebseiten der Website, z. B. Suchmaschinenoptimierungslandeseiten (SEO-Landeseiten) beinhaltet.

13. Verfahren nach einem vorhergehenden Anspruch, wobei das Aktualisieren der Verknüpfungen in dem Website-Backend unter Verwendung der aktuellsten Datenbanktabellen aus der Datenbank Aktualisieren von mindestens einhunderttausend Verknüpfungen beinhaltet.

14. Verfahren nach einem vorhergehenden Anspruch, wobei das Aktualisieren der Verknüpfungen in dem Website-Backend unter Verwendung der aktuellsten Datenbanktabellen aus der Datenbank Aktualisieren von mindestens einer Million Verknüpfungen beinhaltet.

15. Verfahren nach einem vorhergehenden Anspruch, wobei das Aktualisieren der Verknüpfungen in dem Website-Backend unter Verwendung der aktuellsten Datenbanktabellen aus der Datenbank Aktualisieren von mindestens zwei Million Verknüpfungen beinhaltet.

16. Verfahren nach einem vorhergehenden Anspruch, wobei die Schritte (i) bis (iv) Folgendes beinhalten:
(a) Auslösen eines gerichteten azyklischen Graphen (DAG), der eine neue Versionsnummer beinhaltet;
(b) Erhalten der Verknüpfungsaktualisierungsdaten;
(c) Identifizieren von relevanten Tabellen, die aktualisiert werden;
(d) Abrufen einer aktuellsten Version der identifizierten Tabellen;
(e) Stellen der Verknüpfungsaktualisierungen in die abgerufene aktuellste Version der identifizierten Tabellen;
(f) Schreiben der Ergebnisse aus Schritt (e) als eine neue Version;
(g) Importieren von Dateien der neuen Version in eine Datenbank, um eine neue Tabelle in der Datenbank zu erzeugen.

17. Verfahren nach einem vorhergehenden Anspruch, wobei in Schritt (iv) die Tabellen im Stapel in die Datenbank importiert werden, z. B. unter Verwendung von Python.

18. System, das ein Website-Backend, ein Website-Frontend und einen Verknüpfungsaktualisierer in Kommunikation mit dem Website-Backend beinhaltet, wobei der Verknüpfungsaktualisierer einen Datenspeicher, eine Datenbank und eine Tabelle für aktuellste Versionen beinhaltet, wobei das System dazu konfiguriert ist, Verknüpfungen in dem Website-Backend mit aktualisierten Verknüpfungen zu aktualisieren, wobei die aktualisierten Verknüpfungen in dem Website-Backend dem Website-Frontend in Kommunikation mit dem Website-Backend verfügbar gemacht werden, wobei
(i) der Verknüpfungsaktualisierer dazu konfiguriert ist, eine mehrdimensionale Datenstruktur, die mindestens zwei Dimensionen umfasst, zu speichern oder auf diese zuzugreifen, wobei die mehrdimensionale Datenstruktur Datenempfangselemente beinhaltet und jedes Datenempfangselement durch eine jeweilige Adresse in der mehrdimensionalen Datenstruktur eindeutig identifiziert ist;
(ii) der Verknüpfungsaktualisierer dazu konfiguriert ist, Aktualisierungsverknüpfungsdaten zu empfangen, die Parameter beinhalten, und die Parameter zu verwenden, um Gruppen von Verknüpfungen in die Datenempfangselemente einzutragen, um aktualisierte Datenempfangselemente zu erzeugen;
(iii) der Verknüpfungsaktualisierer dazu konfiguriert ist, die aktualisierten Datenempfangselemente in den Datenspeicher in einem Datenspeicherformat zu stellen, wobei der Datenspeicher Daten beinhaltet, welche die aktualisierten Datenempfangselemente in dem Datenspeicher Datenbanktabellen zuordnen, wobei die Datenbanktabellen in Eins-zu-Eins-Entsprechung mit den aktualisierten Datenempfangselementen in dem Datenspeicher stehen;
(iv) der Verknüpfungsaktualisierer dazu konfiguriert ist, neue Datenbanktabellen unter Verwendung der Daten, welche die aktualisierten Datenempfangselemente in dem Datenspeicher den Datenbanktabellen zuordnen, zu speichern und die neuen Datenbanktabellen in die Datenbank aufzunehmen und die aufgenommenen neuen Datenbanktabellen in der Tabelle für aktuellste Versionen zu verzeichnen;
(v) der Verknüpfungsaktualisierer dazu konfiguriert ist, die Tabelle für aktuellste Versionen zu verwenden, um aktuellste Datenbanktabellen aus der Datenbank zu erlangen, und die Verknüpfungen in dem Website-Backend unter Verwendung der aktuellsten Datenbanktabellen aus der Datenbank zu aktualisieren, wobei das Aktualisieren der Verknüpfungen in dem Website-Backend unter Verwendung der aktuellsten Datenbanktabellen aus der Datenbank Aktualisieren von mindestens zehntausend Verknüpfungen beinhaltet, und
(vi) das Website-Backend dazu konfiguriert ist, dem Website-Frontend die aktualisierten Verknüpfungen in dem Website-Backend verfügbar zu machen, wobei das Backend Seiteninstanzen beinhaltet, wobei jede Seiteninstanz Metadaten bezüglich der Seite, die Daten bezüglich einer Adresse oder einer Gruppe von Adressen, die mit der Seite assoziiert ist, beinhalten, in der mehrdimensionalen Datenstruktur beinhaltet und das Backend dazu konfiguriert ist, Seiteninstanzen und Verknüpfungen, die in Datenbanktabellen bezüglich der Adresse oder der Gruppe von Adressen beinhaltet sind, zu verwenden, um dem Frontend Webseiten bereitzustellen.

19. System nach Anspruch 18, das dazu konfiguriert ist, ein Verfahren nach einem der Ansprüche 1 bis 17 durchzuführen.

## Revendications

1. Procédé mis en œuvre par ordinateur de mise à jour de liens dans un arrière-plan de site web avec des liens mis à jour, dans lequel les liens mis à jour dans l'arrière-plan de site web sont rendus disponibles pour un avant-plan de site web en communication avec l'arrière-plan de site web, le procédé incluant les étapes consistant à :
(i) stocker ou accéder à une structure de données multidimensionnelle, comprenant au moins deux dimensions, la structure de données multidimensionnelle comprenant des éléments de réception de données, chaque élément de réception de données étant identifié de manière unique par une adresse respective dans la structure de données multidimensionnelle ;
(ii) recevoir des données de lien de mise à jour comprenant des paramètres, et utiliser les paramètres pour introduire des groupes de liens dans les éléments de réception de données pour produire des éléments de réception de données mis à jour ;
(iii) placer les éléments de réception de données mis à jour dans un dépôt de données, dans un format de dépôt de données, le dépôt de données comprenant des données mettant en correspondance les éléments de réception de données mis à jour dans le dépôt de données avec des tables de base de données, dans lequel les tables de base de données sont en correspondance un pour un avec les éléments de réception de données mis à jour dans le dépôt de données ;
(iv) stocker de nouvelles tables de base de données en utilisant les données mettant en correspondance les éléments de réception de données mis à jour dans le dépôt de données avec les tables de base de données, et intégrer les nouvelles tables de base de données dans une base de données, et enregistrer les nouvelles tables de base de données intégrées dans une table de dernières versions ;
(v) utiliser la table de dernières versions pour obtenir des dernières tables de base de données à partir de la base de données, et mettre à jour les liens dans l'arrière-plan de site web en utilisant les dernières tables de base de données provenant de la base de données, dans lequel la mise à jour des liens dans l'arrière-plan de site web en utilisant les dernières tables de base de données provenant de la base de données comprend la mise à jour d'au moins dix mille liens, et
(vi) l'arrière-plan de site web rendant disponibles les liens mis à jour dans l'arrière-plan de site web pour l'avant-plan de site web, dans lequel l'avant-plan de site web est en communication avec l'arrière-plan de site web, dans lequel l'arrière-plan comprend des instances de page, dans lequel chaque instance de page comprend des métadonnées relatives à la page, comprenant des données relatives à une adresse, ou à un groupe d'adresses, associées à la page, dans la structure de données multidimensionnelle, l'arrière-plan utilisant des instances de page et des liens inclus dans des tables de base de données relatives à l'adresse, ou au groupe d'adresses, pour fournir des pages web à l'avant-plan.

2. Procédé selon la revendication 1, dans lequel le site web est un site web pour des services de voyage.

3. Procédé selon la revendication 2, dans lequel les services de voyage comprennent des vols, ou des réservations d'hôtel, ou des locations de voiture.

4. Procédé selon l'une quelconque des revendications précédentes, dans lequel les paramètres définissent quels liens apparaissent sur quelle page ou quelles pages de site web donneur.

5. Procédé selon l'une quelconque des revendications précédentes, dans lequel un élément d'instance de page respectif comprend des liens respectifs générés par le propriétaire du site web et des liens respectifs générés par un tiers.

6. Procédé selon l'une quelconque des revendications précédentes, dans lequel des tables de base de données sont stockées dans la base de données (par exemple DynamoDB), les tables de base de données comprenant des éléments d'instance de page.

7. Procédé selon l'une quelconque des revendications précédentes, dans lequel des groupes de liens sont des enfants à l'intérieur d'un élément d'instance de page respectif.

8. Procédé selon l'une quelconque des revendications précédentes, dans lequel des groupes respectifs de liens sont associés à des instances de page web respectives.

9. Procédé selon l'une quelconque des revendications précédentes, dans lequel les données de lien de mise à jour reçues comprennent une mise à jour respective pour des instances de page respectives.

10. Procédé selon l'une quelconque des revendications précédentes, dans lequel les nouvelles tables de base de données sont stockées dans un format dans lequel des liens associés à une URL sont prêts à être servis à partir de la base de données.

11. Procédé selon l'une quelconque des revendications précédentes, comprenant l'étape consistant à : (vii) l'avant-plan de site web servant des premiers liens mis à jour parmi les liens mis à jour dans un contenu de page web d'une page web, en réponse à une demande pour la page web.

12. Procédé selon l'une quelconque des revendications précédentes, comprenant la mise à jour de liens dans des pages web principales du site web, par exemple des pages d'atterrissage d'optimisation pour les moteurs de recherche (SEO) .

13. Procédé selon l'une quelconque des revendications précédentes, dans lequel la mise à jour des liens dans l'arrière-plan de site web en utilisant les dernières tables de base de données provenant de la base de données comprend la mise à jour d'au moins cent mille liens.

14. Procédé selon l'une quelconque des revendications précédentes, dans lequel la mise à jour des liens dans l'arrière-plan de site web en utilisant les dernières tables de base de données provenant de la base de données comprend la mise à jour d'au moins un million de liens.

15. Procédé selon l'une quelconque des revendications précédentes, dans lequel la mise à jour des liens dans l'arrière-plan de site web en utilisant les dernières tables de base de données provenant de la base de données comprend la mise à jour d'au moins deux millions de liens.

16. Procédé selon l'une quelconque des revendications précédentes, dans lequel les étapes (i) à (iv) comprennent :
(a) le déclenchement d'un graphe orienté acyclique (DAG), comprenant un nouveau numéro de version ;
(b) l'obtention des données de mise à jour de lien ;
(c) l'identification de tables pertinentes qui sont en cours de mise à jour ;
(d) la récupération d'une dernière version des tables identifiées ;
(e) le placement des mises à jour de lien dans la dernière version récupérée des tables identifiées ;
(f) l'écriture des résultats de l'étape (e) sous forme d'une nouvelle version ;
(g) l'importation de fichiers de la nouvelle version dans une base de données, pour créer une nouvelle table dans la base de données.

17. Procédé selon l'une quelconque des revendications précédentes, dans lequel à l'étape (iv), des tables sont importées par lots dans la base de données, par exemple en utilisant python.

18. Système comprenant un arrière-plan de site web, un avant-plan de site web, et un outil de mise à jour de lien en communication avec l'arrière-plan de site web, l'outil de mise à jour de lien comprenant un dépôt de données, une base de données et une table de dernières versions, le système étant configuré pour mettre à jour des liens dans l'arrière-plan de site web avec des liens mis à jour, dans lequel les liens mis à jour dans l'arrière-plan de site web sont rendus disponibles pour l'avant-plan de site web en communication avec l'arrière-plan de site web, dans lequel
(i) l'outil de mise à jour de lien est configuré pour stocker ou pour accéder à une structure de données multidimensionnelle, comprenant au moins deux dimensions, la structure de données multidimensionnelle comprenant des éléments de réception de données, chaque élément de réception de données étant identifié de manière unique par une adresse respective dans la structure de données multidimensionnelle ;
(ii) l'outil de mise à jour de lien est configuré pour recevoir des données de lien de mise à jour comprenant des paramètres, et pour utiliser les paramètres pour introduire des groupes de liens dans les éléments de réception de données pour produire des éléments de réception de données mis à jour ;
(iii) l'outil de mise à jour de lien est configuré pour placer les éléments de réception de données mis à jour dans le dépôt de données, dans un format de dépôt de données, le dépôt de données comprenant des données mettant en correspondance les éléments de réception de données mis à jour dans le dépôt de données avec des tables de base de données, dans lequel les tables de base de données sont en correspondance un pour un avec les éléments de réception de données mis à jour dans le dépôt de données ;
(iv) l'outil de mise à jour de lien est configuré pour stocker de nouvelles tables de base de données en utilisant les données mettant en correspondance les éléments de réception de données mis à jour dans le dépôt de données avec les tables de base de données, et pour intégrer les nouvelles tables de base de données dans la base de données, et pour enregistrer les nouvelles tables de base de données intégrées dans la table de dernières versions ;
(v) l'outil de mise à jour de lien est configuré pour utiliser la table de dernières versions pour obtenir des dernières tables de base de données à partir de la base de données, et pour mettre à jour les liens dans l'arrière-plan de site web en utilisant les dernières tables de base de données provenant de la base de données, dans lequel la mise à jour des liens dans l'arrière-plan de site web en utilisant les dernières tables de base de données provenant de la base de données comprend la mise à jour d'au moins dix mille liens, et
(vi) l'arrière-plan de site web est configuré pour rendre disponibles les liens mis à jour dans l'arrière-plan de site web pour l'avant-plan de site web, dans lequel l'arrière-plan comprend des instances de page, dans lequel chaque instance de page comprend des métadonnées relatives à la page, comprenant des données relatives à une adresse, ou à un groupe d'adresses, associées à la page, dans la structure de données multidimensionnelle, l'arrière-plan étant configuré pour utiliser des instances de page et des liens inclus dans des tables de base de données relatives à l'adresse, ou au groupe d'adresses, pour fournir des pages web à l'avant-plan.

19. Système selon la revendication 18, configuré pour réaliser un procédé selon l'une quelconque des revendications 1 à 17.
